(19) Europäisches Patentamt
European Patent Office
Office européen des brevets

(11) Veröffentlichungsnummer: **0 191 441**
**B1**

(12) **EUROPÄISCHE PATENTSCHRIFT**

(45) Veröffentlichungstag der Patentschrift: **28.11.90**

(51) Int. Cl.$^5$: **B 01 D 53/36**

(21) Anmeldenummer: **86101632.7**

(22) Anmeldetag: **08.02.86**

# (54) Vorrichtung zur Entfernung unerwünschter Bestandteile aus einem Rauchgas.

(30) Priorität: **15.02.85 DE 3505349**
**27.02.85 DE 3506940**

(43) Veröffentlichungstag der Anmeldung:
**20.08.86 Patentblatt 86/34**

(45) Bekanntmachung des Hinweises auf die Patenterteilung:
**28.11.90 Patentblatt 90/48**

(84) Benannte Vertragsstaaten:
**AT CH DE FR IT LI NL SE**

(56) Entgegenhaltungen:
**EP-A-0 161 470**
**FR-A-2 310 797**
**FR-A-2 395 463**
**US-A-2 946 651**

(73) Patentinhaber: **Linde Aktiengesellschaft**
**Abraham-Lincoln-Strasse 21**
**D-6200 Wiesbaden (DE)**

(72) Erfinder: **Kliem, Erhard, Dipl.-Ing.**
**Am Mitterfeld 1b**
**D-8196 Eurasburg (DE)**
Erfinder: **Baldus, Wolfgang, Dr. Dipl.Phys.**
**Jaiserstrasse 51**
**D-8023 Pullach (DE)**
Erfinder: **Linde, Gerhard, Dr. Dipl.-Phys.**
**Eichleite 50**
**D-8022 Grünwald (DE)**
Erfinder: **Kersten, Jürgen, Dipl.-Ing.**
**Hauptstrasse 2**
**D-8021 Kleindingharting (DE)**
Erfinder: **Riquarts, Hans-Peter, Dr. Dipl.-Ing.**
**Wolfratshauser Strasse 88a**
**D-8023 Pullach (DE)**

(74) Vertreter: **Schaefer, Gerhard, Dr.**
**Linde Aktiengesellschaft Zentrale Patentabteilung**
**D-8023 Höllriegelskreuth (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 191 441 B1

**Beschreibung**

Die Erfindung betrifft eine Vorrichtung und ein Verfahren zur Entfernung unerwünschter gasförmiger Bestandteile aus einem bei einer Verbrennung anfallenden Rauchgas.

Das Problem der Entfernung unerwünschter gasförmiger Bestandteile aus Verbrennungsgasen gewinnt zunehmend an Bedeutung. Diese Verbrennungs- oder Rauchgase entstehen in der Regel durch Verbrennung von kohlenstoffhaltigen Brennstoffen, wie Öl, Kohle oder Erdgas, aber auch bei der Verbrennung von Wasserstoff, wenn diese in Gegenwart von Luft durchgeführt wird. Die Entfernung von gegebenenfalls vorhandenen Schwefelverbindungen, insbesondere Schwefeldioxid, kann dabei nach Abkühlung und — falls erforderlich — Vorreinigung (insbesondere Staub- und Rußabscheidung sowie gegebenenfalls Entfernung von HF und HCl) in günstiger Weise mittels eines physikalisch wirdkenden Absorptionsmittels durchgeführt werden. Dabie wird nahezu das gesamte ursprünglich im Rauchgas enthaltene Schwefeldioxid ausgewaschen. Ein derartiges Verfahren ist beispielsweise in der DE—OS 32 37 387 beschrieben.

Dieses bekannte Verfahren dient jedoch nur zur Entfernung von Schwefeldioxid. In vielen Fällen enthält das Rauchgas aber noch weitere Bestandteile, die nicht in die Atmosphäre gelangen dürfen, wie insbesondere Stickoxide.

Zur Entfernung von Stickoxiden sind bereits katalytische Verfahren bekannt bei denen $NO_2$ und NO in Gegenwart von Ammoniak gemäß

$$4\ NH_3 + 4NO_2 + O_2 \xrightarrow{\text{Katalysator}} 4\ N_2 + 6\ H_2O \text{ bzw.}$$

$$4\ NH_3 + 2NO_2 + O_2 \xrightarrow{\text{Katalysator}} 3\ N_2 + 6\ H_2O$$

bei hohen Temperaturen zwischen ca. 250°C und 450°C zu unschädlichem $N_2$ und Wasser reduziert werden, die an die Atmosphäre abgegeben werden dürfen.

Aus der FR—A—2 395 463 ist eine Vorrichtung zur Entfernung unerwünschter gasförmiger Bestandteile aus einem bei einer Verbrennung anfallenden Rauchgas bekannt, wobei im Rauchgasstrom nacheinander ein erster Wärmetauscher, ein Entnitrierungskatalysator und zwei weitere Wärmetauscher vertikal übereinander angeordnet sind.

Der vorliegenden Erfindung liegt die Aufgabe zugrunde, eine Vorrichtung der eingangs genannten Art bereitzustellen, bei der eine allzugroße Belastung des Katalysators verhindert wird.

Diese Aufgabe wird erfindungsgemäß durch die Merkmale des Anspruchs 1 gelöst.

Die üblicherweise bei einer Verbrennung anfallenden Rauchgase enthalten Verunreinigungen, wie $SO_2$, $SO_3$, HCl, HF, Staub und Ruß. Diese Verunreinigungen sollten, um die Lebensdauer der zur Umwandlung von Stickoxiden verwendeten Katalysatoren zur verlängern, vor den Katalysatoren entfernt werden. Insbesondere die $SO_2$-Entfernung erfolgt gewöhnlich bei Temperaturen, die wesentlich unter denen zur katalytischen $NO_x$-Umwandlung erforderlichen liegen. Mit der erfindungsgemäßen Vorrichtung wird nunmehr ermöglicht, das Rauchgas in Wärmetauschern anzuwärmen, sodann die katalytische Umsetzung durchzuführen und das gereinigte Rauchgas in mindestens einem weiteren Wärmetauscher wieder abzukühlen.

Zur Abkühlung des Rauchgases wird ein in einem vorangegangenen Schaltzyklus vom Rauchgas durchströmter Wärmetauscher zu dessen Anwärmung verwendet. Somit kann die Anwärmung in Wärmetauschern erfolgen, die durch das heiße $NO_x$-freie Rauchgas erwärmt werden und diese Wärme wiederum aus das anzuwärmende $NO_x$-haltige Rauchgas abgeben. Auf diese Weise kann ohne großen Energieaufwand eine ausreichende Aufheizung des Rauchgases gewährleistet werden.

Zur Umschaltung des Rauchgasstromes auf die verschiedenen Wärmetauscher ist im Rauchgasstrom eine Schalteinrichtung vorgesehen ist, die mit einer Zuführung für das Rauchgas, einer Ableitung für das behandelte Rauchgas sowie mit jedem der Wärmetauscher verbunden ist. Insbesondere kann dabei eine Vierwegklappe als Schalteinrichtung zur Anwendung gelangen.

Dabie ist es von Vorteil, wenn Wärmetauscher mit Wärmespeichermasse verwendet werden. Somit können neben üblichen Wärmetauschern mit Rohren auch Wärmetauscher mit Schüttungen zur Anwendung gelangen, wie beispielsweise Regeneratoren oder Rekuperatoren. Besonders günstig ist es dabei, wenn als Wärmespeichermasse keramische Masse eingesetzt wird, die einen möglichst vollständigen Wärmeaustausch sicherstellt.

Das heiße Rauchgas wird nach Anwärmung über den Katalysator geleitet, so daß die bereits erwähnten Reaktionen stattfinden können. Dabei wird insbesondere die erstgenannte Reaktion auftreten, da in dem Rauchgas meist über 90% NO und der Rest $NO_2$ enthalten sind. Das bei der katalytischen Umwandlung entstehende $N_2$ und Wasser bzw. bei den hohen Temperaturen Wasserdampf sind ungefährlich und können ohne Bedenken in die Atmosphäre abgegeben werden.

Das heiße gereinigte Gas gibt dann seine Wärme an einen in einem vorangegangenen Zyklus zur Erwärmung von $NO_x$-haltigem Rauchgas verwendeten Wärmetauscher ab, so daß dieser Wärmetauscher in einem weiteren Zyklus wieder zur Anwärmung des Rauchgases zur Verfügung steht. Der Rauchgasstrom

kann dabei nach einer Zeit von etwa 1 bis 20 Minuten, vorzugsweise 3 bis 5 Minuten auf den anderen Wärmetauscher umgeschaltet werden.

Für die Anordnung der Wärmetauscher und des Katalysators ergeben sich mehrere Möglichkeiten. Nach einer vorteilhaften Variante sind der Wärmetauscher, der Katalysator und der weitere Wärmetauscher übereinander angeordnet. Alternativ können beide Wärmetauscher unmittelbar übereinander und der Katalysator oberhalb oder unterhalb der Wärmetauscher angeordnet sein.

Bei der erstgenannten Anordnung (Katalysator oben) ergeben sich folgendes Vorteile: Der Katalysator hat im Vergleich zu den Wärmetauschern ein wesentlich geringeres Gewicht und kann daher aus Gewichtsgründen oben liegen. Überdies ist bei dieser Anordnung eine Erweiterungsmöglichkeit des Systems nach oben gegeben. Das ist beispielsweise für den Fall von Bedeutung, daß ein anderer oder ein zusätzlicher Katalysator eingesetzt werden soll. Demgegenüber hat die zweitgenannte Anordnung (Katalysator unten) den Vorteil, daß der Katalysator wesentlich leichter auswechselbar ist.

Schließlich besteht auch die Möglichkeit, die Wärmetauscher nebeneinander und den Katalysator oberhalb oder unterhalb der Wärmetauscher anzuordnen. Werden die Wärmetauscher nebeneinander angeordnet, so verringert sich in erster Linie die Gesamtbauhöhe, was aus statischen Gründen vorteilhaft sein kann. Überdies sind die Wärmetauscher leichter zugänglich, was insbesondere bei deren Ausbildung als Regeneratoren von Vorteil ist, wenn die Regeneratorschüttung aus Regenerierzwecken ausgewaschen werden soll. Für die Anordnung des Katalysators oberhalb oder unterhalb der nebeneinanderliegenden Wärmetauscher gilt das oben Gesagte. Welche der jeweiligen Möglichkeiten gewählt wird, hängt dabei jeweils insbesondere vom Platzangebot ab.

Bei den angegebenen Anordnungsmöglichkeiten für Wärmetauscher und Katalysatoren wird die Druchströmungsrichtung des Rauchgases durch den Katalysator umgekehrt, wenn das Rauchgas von dem einen auf den anderen Wärmetauscher umgeschaltet wird. Diese wechselnde Durchströmung des Katalysators kann zu großer Beanspruchung desselben führen. Aus diesem Grunde ist erfindungsgemäß vorgesehen, daß im Rauchgasstrom zwischen den Wärmetauschern eine Schaltarmatur angeordnet ist, die einerseits mit dem Katalysator in Verbindung steht und andererseits wahlweise mit einem der beiden Wärmetauscher verbindbar ist. Somit besteht die Möglichkeit, das Rauchgas immer in derselben Richtung über den Katalysator zu leiten, unabhängig davon, welchem Wärmetauscher es zuerst zugeführt wird. Als Schaltarmatur kann hierbei eine Vierwegklappe dienen.

Der Katalysator kann somit also immer von oben nach unten oder immer von unten nach oben durchströmt werden. Die letztere Verfahrensführung bietet dabei folgenden zusätzlichen Vorteil: Bei horizontaler Katalysatoranordnung z.B. auf einem Sieb oder Lochboden als Halterung erfolgt auf dem Sieb oder Lochboden eine grobe Staubabscheidung. Somit kann der Katalysator zusätzlich eine Reinigungswirkung erfüllen.

Zum Ausgleich von Wärmeverlusten bei nicht vollständigem Wärmeaustauch ist weiterhin vorgesehen, daß der Katalysator mit einer Wärmequelle verbunden ist. Diese Wärmequelle kann strömungseingangs- und/oder strömungsausgangsseitig vom Katalysator angeordnet sein. Die alternative Anordnung ist insbesondere dann möglich, wenn der Katalysator grundsätzlich einseitig durchströmt wird. Als Wärmequelle kommt hier insbesondere heißes Rauchgas in Frage. Das Rauchgas kann dabei z.B. durch Verbrennung hochkalorischer Brennstoffe in einer Brennkammer erzeugt und von außen über eine Heißgaszuleitung dem Katalysator zugeführt oder direkt durch Verbrennung hochkalorischer Brennstoffe im Reaktor erzeugt werden. Dabei reicht meist eine kleine Rauchgasmenge aus, um die Verluste zu decken. Natürlich können die Wärmeverluste auch durch andere Wärmequellen, wie elektrische Beheizung oder durch in einem Wärmetauscher kondensierenden Dampf gedeckt werden. Überdies besteht die Möglichkeit, daß der Katalysator mit einer beheizten Bypass-Leitung für das Rauchgas verbunden ist. Mit Hilfe dieser Bypaßleitung kann insbesondere in Störfällen oder für Reparaturzwecke die Entstickungsanlage (Wärmetauscher, Katalysator) umgangen werden, ohne daß die Gesamtanlage abgeschaltet werden muß.

Gemäß einer sehr vorteilhaften Ausgestaltungsform des Erfindungsgedankens sind Wärmetauscher und Katalysator in einem gemeinsamen Behälter, der bevorzugt einen rechteckigen, insbesondere quadratischen Querschnitt aufweist, angeordnet. Es ist jedoch auch ein Behälter mit kreisrundem Querschnitt denkbar.

Nach einer äußerst zweckmäßigen Ausführungsform weist der Behälter dabei eine Wärmeisolierung auf. Der Wandaufbau des Behälters besteht danach aus einer ein- oder mehrschichtigen Zustellung keramischer Materialien. Das Material-Engineering wird den wärme- und betriebetechnischen Bedingungen angepaßt. Je nach Zustellungsart kann es erforderlich sein, die heißgehende Schicht mit dem Behältermantel zu verankern. Die Zustellung kann dabei eine Gesamtdicke von 20 bis 250 mm, bevorzugt 100 bis 140 mm aufweisen. Als Materialien kommen feuerfeste und wärmedämmende Baustoffe in Frage, insbesondere Beton, Stein bzw. Steinwolle oder Faserisolierung. Falls erforderlich, ist die Wärmedämmung nicht nur auf der Behälterinnenseite sondern auch auf der Außenseite aufgebracht.

Um die katalytische Umwandlung der Stickoxide zu ermöglichen, ist es übedies notwendig, daß der Strömungsweg zwischen dem ersten Wärmetauscher und dem Katalysator eine Zuleitung für ein Hilfsfluid, insbesondere Ammoniak, aufweist.

Gemäß einer besonders vorteilhaften Ausführungsform der erfindungsgemäßen Vorrichtung ist der Katalysator in mehrere Schichten unterteilt. Dies kommt insbesondere dann zur Anwendeung, wenn bei

engen Platzverhältnissen die erforderliche Fläche für das Katalysatorbett bei gegebener Raumgeschwindigkeit und Lineargeschwindigkeit nicht zur Verfügung steht. Dann vergrößert die erfindungsgemäße Aufteilung des Katalysators in mehrere Schichten den Anströmquerschnitt, d.h. die Oberfläche des Bettes, da die Summe der Oberflächen der einzelnen Schichten größer als die Querschnittsflächen des Strömungsweges ist. Durch die Aufteilung des Katalysators in mehrere Schichten werden außerdem geringere Schütthöhen erreicht, wodurch weniger Verschleiß durch Abrieb des Katalysators auftritt. Die Aufteilung des Katalysators in mehrere Schichten vergrößert überdies die Flexibilität hinsichtlich der Anordnung der Katalysatormasse.

Es erweist sich als zweckmäßig, wenn die Katalysatorschichten in Durchströmungsrichtung betrachtet einander mindestens zum Teil überlagern. Bei dieser Anordnung liegen die Katalysatorschichten mit Abstand zueinander in verschiedenen Ebenen senkrecht zur Durchströmungsrichtung des Rauchgases, wobei zumindest Abschnitte der Katalysatorschichten miteinander zur Deckung kommen.

Besonders vorteilhaft ist es, wenn, wie weiter vorgeschlagen wird, die Katalysatorschichten horizontal angeordnet sind. Bei dieser Anordnung ist der Katalysatorabrieb am geringsten.

Bei einer bevorzugten Ausgestaltung des Erfindungsgedankens ist zumindest ein Teil der Katalysatorschichten stufenartig versetzt übereinander angeordnet. Um eine Gleichverteilung der Gasmengen über den einzelnen Schüttungen zu erreichen, nehmen die Abstände de einzelnen Schüttungen dabei in Strömungsrichtung aus Gründen des Strömungswiderstandes ab. Alternativ kann zumindest ein Teil der Katalysatorschichten auch deckungsgleich übereinander angeordnet sein. Dabei können die Katalysatorschichten in einem Strömungsweg von kreisförmigem oder rechteckigem Querschnitt symmetrisch zu dessen Längsachse angeordnet sein.

Die erfindungsgemäße Vorrichtung beitet den Vorteil, daß ein kostengünstiger Katalysator bei optimal wählbarer Reaktionstemperatur verwendet werden kann, dessen Lebensdauer erhöht ist, da keine schädigenden Verunreinigungen im Gasstrom mehr vorhanden sind. Bei Lastschwankungen ist die $NH_3$-Zuspeisung regulierbar, wobei der Temperatureinfluß klein gehalten werden kann.

Zur Umwandlung von Stickoxiden kommen die an sich bekannten Katalysatoren zur Anwendung, wie z.B. Zeolithe oder Vanadiumoxid/Titanoxid auf Träger oder Edelmetallkatalysatoren auf Träger. Je nach verwendetem Katalysator wird dabei das Rauchgas auf die für die Umsetzung auf dem Katalysator notwendige Temperatur in dem Wärmetauscher angewärmt. Bevorzugt liegt diese Temperatur zwischen 250°C und 400°C. Diese Temperaturen sind aus dem Grund ausreichend, da der Katalysator nichts von seiner Aktivität durch andere Verunreinigungen einbüßt.

Die Katalysatorschichten können als Schüttungen ausgebildet sein, wobei die Katalysatormasse teilchenförmig, z.B. ring-, zylinder-, kugel- oder sternförmig ist. Es besteht aber auch die Möglichkeit, wabenförmige Katalysatoren einzusetzen.

Die erfindungsgemäße Vorrichtung läßt sich allgemein bei allen Rauchgasreinigungsanlagen einsetzen.

Im folgenden seien weitere Vorteile und Ausführungsformen der Erfindung anhand eines in drei Figuren dargestellten Ausführungsbeispiels näher erläutert.

Es zeigen:

Figur 1 Anordnung Wärmetauscher, Wärmetauscher, einseitig durchströmter Katalysator

Figure 2 Anordnung einseitig durchströmter Katalysator, Wärmetauscher, Wärmetauscher

Figur 3 Anordnung wie bei Fig 2, jedoch mit Lastanpassung.

Figur 1 zeigt eine Vorrichtung, in der die Regeneratoren 2 übereinander und darüber einseitig durchströmte Katalysatorschichten 3 angeordnet sind. Das Rauchgas, das über Leitung 5 eintritt und in dem oberen Regenerator 2 erwärmt wurde, wird bei horizontal stehender warmer Klappe 13 um das Leitblech 14 geleitet und dann in Pfeilrichtung (durchgezogene Pfeile) über die Katalysatorschichten 3 geführt und über Leitung 16 abgezogen. Das Rauchgas tritt über Leitung 17 wieder in den unteren Teil des Reaktors 1 ein und wird nach Abkühlung im unteren Regenerator 2 über Leitung 6 abgezogen. Bei Eintritt über Leitung 6 gilt die gestrichelt dargestellte Strömungsrichtung, wobei dann die Klappe 13 um 90° gedreht ist, so daß sie senkrecht steht. Wie zu erkennen ist, wird dabei der Katalysator immer von unten nach oben durchströmt.

Diese Vorrichtung hat den Vorteil daß das Rauchgas nicht nur in dem Bereich zwischen dem Leitblech 14 und dem äußeren Reaktorrand mittels eines Heißgases, das über Leitung 12 zugeführt wird, erwärmt werden kann, sondern auch in dem Rohr 18. Hierzu kann über Leitung 19 Brenngas direkt in das Rohr 18 eingeführt werden, um dort vebrannt zu werden. Alternativ kann über Leitung 19 auch Heißgas eingeführt werden. Weiterhin besteht die Möglichkeit, das Rohr 18 indirekt zu beheizen. Dabei könnte auch lediglich ein Teilstrom des Rauchgases in einer Baypass-Leitung angewärmt werden. Diese Ausführungsform der zusätzlichen Anwärmung des Rauchgases außerhalb des Reaktors 1 ist bei allen vorangegangen und noch zu beschreibenden Ausführungsformen ebenfalls denkbar.

Bei der Vorrichtung gemäß Figur 2 ist der Katalysator ebenerdig angeordnet und die Regeneratoren sind oberhalb des Katalysators in dem Reaktor 1 untergebracht. Zur Verdeutlichung ist bei diesem Beispiel die Vierwegklappe 7 mit Anschlüssen 5 and 6 sowie einem Anschlußrohr 20 nochmals getrennt neben dem Reaktor 1 dargestellt.

Rauchgas gelangt über Leitung 5 und Vierwegklappe 7 (dadurchgezogene Stellung) über Anschlußteil 20 zum oberen Regenerator 2, wird dort angewärmt und über Vierwegklappe 13 (durchgezogene Stellung

der Klappe) in das Rohr 18 geführt. Dort kann das Rauchgas zusätzlich über 19 erwärmt werden. In das Rohr 18 wird über Leitung 10 $NH_3$ eingeführt, das in einem Mischer 21 mit dem Rauchgas vermischt wird. Das Gasgemisch wird sodann in Pfeilrichtung über die Katalysatorschichten 3 geführt und weiter in Pfeilrichtung über eine Leitung 22 und Vierwegklappe 13 zum unteren Regenerator 2 zur Abkühlung geleitet. Von dort aus gelangt das Gas über die Klappe 7 in Leitung 6, über die es aus dem Reaktor 1 abgezogen wird.

In dem nächsten Zyklus wird das Gas über die gestrichelt dargestellte Stellung der Klappe 7 zuerst auf den unteren Regenerator und dann über die gestrichelt dargestellte Lage de Klappe 13 über Rohr 18 über die Katalysatorschichten geführt, woraufhin es nach Durchströmen des oberen Regenerators 2 abgekühlt abgezogen wird.

In der Darstellung der Figur 2 sind mit 2a jeweils die Füllöffnung für die Regeneratorschüttungen bezeichnet. Um an die Füllöffnung des unteren Regenerators 2 zu kommen, ist das Kanalstück 22a seitlich versetzt angeordnet. Mit 3a ist weiterhin eine Montageöffnung für den Katalysator bezeichnet. Diese Ausführungsform hat den großen Vorteil, daß der Katalysator ohne große Schwierigkeiten auswechselbar ist. Die Klappen 7 and 13 sind symmetrisch eingebaut, wodurch kurze Leitungen ermöglicht werden.

Die Anordnung gemäß Figur 3 entspricht weitgehend der von Figur 2, jedoch ist eine Lastanpassung vorgesehen.

Hierzu ist im Rauchgasströmungsweg eine Klappe 25 angeordnet. Bei voller Last ist diese Klappe geöffnet, so daß das Rauchgas parallel über die beiden Katalysatorschichten 3 in Pfeilrichtung strömt. Bei halber Last ist die Klappe geschlossen und es wird nur die obere Katalysatorschicht durchströmt.

Es ist klar, daß die Lastanpassung mit unterschiedlicher Anzahl von Katalysatorschichten und Klappen (immer eine Klappe weniger als Katalysatorschichten) durchgeführt werden kann. In sinnvoller Weise erfolgt die Lastanpassung jedoch mit 2 oder 3 Katalysatorschichten, d.h. einer oder zwei Klappen. Damit sind Anpassungen an $\frac{1}{3}$, $\frac{1}{2}$, $\frac{2}{3}$, volle Last möglich.

**Patentansprüche**

1. Vorrichtung zur Entfernung unerwünschter gasförmiger Bestandteile aus einem bei einer Verbrennung anfallenden Rauchgas, wobei im Rauchgasstrom nacheinander mindestens ein erster Wärmetauscher, ein zur Umwandlung von Stickoxiden geeigneter Katalysator sowie mindestens ein weiterer Wärmetauscher angeordnet sind und eine Schalteinrichtung vorgesehen ist, die mit einer Zuführung für das Rauchgas, einer Ableitung für das behandelte Rauchgas sowie mit jedem der Wärmetauscher verbunden ist und daß der Wärmetauscher, der Katalysator und der weitere Wärmetauscher übereinander so angeordnet sind, daß beide Wärmetauscher unmittelbar übereinander und der Katalysator oberhalb oder unterhalb der Wärmetauscher oder die Wärmetauscher nebeneinander und der Katalysator oberhalb oder unterhalb der angeordnet sind, wobei im Rauchgasstrom zwischen den Wärmetauschern eine zusätzliche Schaltarmatur angeordnet ist, die um eine einseitige Durchströmung des Katalysators zu erreichen, einerseits mit dem Katalysator in Verbindung steht und andererseits wahlweise mit einem der beiden Wärmetauscher verbindbar ist.

2. Vorrichtung nach Anspruch 1, dadurch gekennzeichnet, daß der Katalysator mit einer Wärmequelle verbunden ist, die strömungseingangs- und/oder strömungsausgangsseitig vom Katalysator vorgesehen ist.

3. Vorrichtung nach Anspruch 2, dadurch gekennzeichnet, daß der Katalysator über eine Heißgaszuleitung mit der Wärmequelle verbunden ist.

4. Vorrichtung nach Anspruch 2, dadurch gekennzeichnet, daß der Katalysator mit einer beheizten Bypassleitung für das Rauchgas verbunden ist.

5. Vorrichtung nach einem der Ansprüche 1 bis 4, dadurch gekennzeichnet, daß Wärmetauscher und Katalysator in einem gemeinsamen Behälter angeordnet sind, welcher eine Wärmeisolierung aufweist.

6. Vorrichtung nach einem der Ansprüche 1 bis 5, dadurch gekennzeichnet, daß der Strömungsweg zwischen dem ersten Wärmetauscher und dem Katalysator eine Zuleitung für ein Hilfsfluid aufweist.

7. Vorrichtung nach Anspruch 1 bis 6, dadurch gekennzeichnet, daß der Katalysator in mehrere Schichten unterteilt ist und, daß zumindest ein Teil der Katalysatorschichten stufenartig versetzt übereinander angeordnet ist.

8. Vorrichtung nach Anspruch 1 bis 6, dadurch gekennzeichnet, daß der Katalysator in mehrere Schichten unterteilt ist und, daß zumindest ein Teil der Katalysatorschichten deckungsgleich übereinander angeordnet ist.

**Revendications**

1. Installation pour l'élimination de constituants gazeux indésirables d'un effluent gazeux produit au cours d'une combustion, dans laquelle sont disposés successivement sur le trajet de l'effluent gazeux, au moins, un premier échangeur de chaleur, un catalyseur comprenant à la conversion des oxydes d'azote ainsi qu'au moins un échangeur de chaleur supplémentaire et est disposé un dispositif de commutation relié à une conduite pour l'amenée de l'effluent gazeux, une conduite d'évacuation de l'effluent traité ainsi

qu'à chacun des échangeurs de chaleur, et en ce que l'échangeur de chaleur, le catalyseur et l'échangeur supplémentaire sont disposés de façon telle que les deux échangeurs de chaleur soient l'un au-dessus de l'autre, le catalyseur étant disposé au-dessus et au-dessous des échangeurs de chaleur ou soient l'un à côté de l'autre, le catalyseur étant disposé au-dessus et au-dessous des échangeurs, et en ce que sur le trajet de l'effluent, entre les échangeurs de chaleur, est disposée une armature de commutation qui, pour permettre une circulation unilatérale du catalyseur, est relié d'une part au catalyseur et, d'autre part, à l'un ou à l'autre des deux échangeurs de chaleur.

2. Installation selon la revendication 1, caractérisée en ce que le catalyseur est relié à une source de chaleur qui est disposée en amont et/ou en aval du catalyseur.

3. Installation selon la revendication 2, caractérisée en ce que le catalyseur est relié à la source de chaleur par une conduite d'amenée de gaz chaud.

4. Installation selon la revendication 2, caractérisée en ce que le catalyseur est relié à une conduite de dérivation chauffée de l'effluent gazeux.

5. Installation selon une quelconque des revendications 1 à 4, caractérisée en ce que l'échangeur de chaleur et le catalyseur sont disposés dans une enceinte commune qui comporte une isolation thermique.

6. Installation selon une quelconque des revendications 1 à 5, caractérisée en ce que le trajet d'écoulement entre le premier échangeur thermique et le catalyseur comporte une conduite d'amenée pour un fluide adjuvant.

7. Installation selon les revendications 1 à 6, caractérisée en ce que le catalyseur est divisé en plusieurs couches et en ce qu'au moins une partie des couches de catalyseur soit décalée de façon étagée les unes au-dessus des autres.

8. Installation selon les revendications 1 à 6, caractérisée en ce que le catalyseur est divisé en plusieurs couches et en ce qu'au moins une partie des couches de catalyseur sont disposées les unes au-dessus des autres.

## Claims

1. A device for eliminating undesired, gaseous constituents from a flue gas occurring during a combustion process, wherein in the flow of the flue gas there are arranged successively at least one first heat exchanger, a catalyst suitable for converting nitrogen oxides, and at least one further heat exchanger and where a switching device is provided which is connected to a supply line for the flue gas, a discharge line for the treated flue gas and each of the heat exchangers, and that the heat exchanger, the catalyst and the further heat exchanger are arranged above one another such that the two heat exchangers are arranged directly above one another and the catalyst is arranged above or below the heat exchangers or the heat exchangers are arranged one beside another and the catalyst is arranged above or below the heat exchangers wherein in the flow of the flue gas between the heat exchangers there is arranged an additional switching arrangement which, in order to achieve a one-sided flow through the catalyst, on the one hand is connected to the catalyst and on the other hand can be connected selectively to one of the two heat exchangers.

2. A device as claimed in claim 1, characterised in that the catalyst is connected to a heat source which is arranged at the flow input end and/or the flow output end of the catalyst.

3. A device as claimed in claim 2, characterised in that the catalyst is connected to the heat source via a hot gas supply line.

4. A device as claimed in claim 2, characterised in that the catalyst is connected to a heated bypass line for the flue gas.

5. A device as claimed in one of claims 1 to 4, characterised in that heat exchangers and catalysts are arranged in a common container which is provided with thermal insulation.

6. A device as claimed in one of claims 1 to 5, characterised in that the flow path between the first heat exchanger and the catalyst includes a supply line for an auxiliary fluid.

7. A device as claimed in claim 1 to 6, characterised in that the catalyst is sub-divided into a plurality of layers and that at least a part of the exchanger layers are offset in stepped fashion one above another.

8. A device as claimed in claim 1 to 6, characterised in that the catalyst is sub-divided into a plurality of layers and that at least a part of the catalyst layers are arranged congruently one above another.

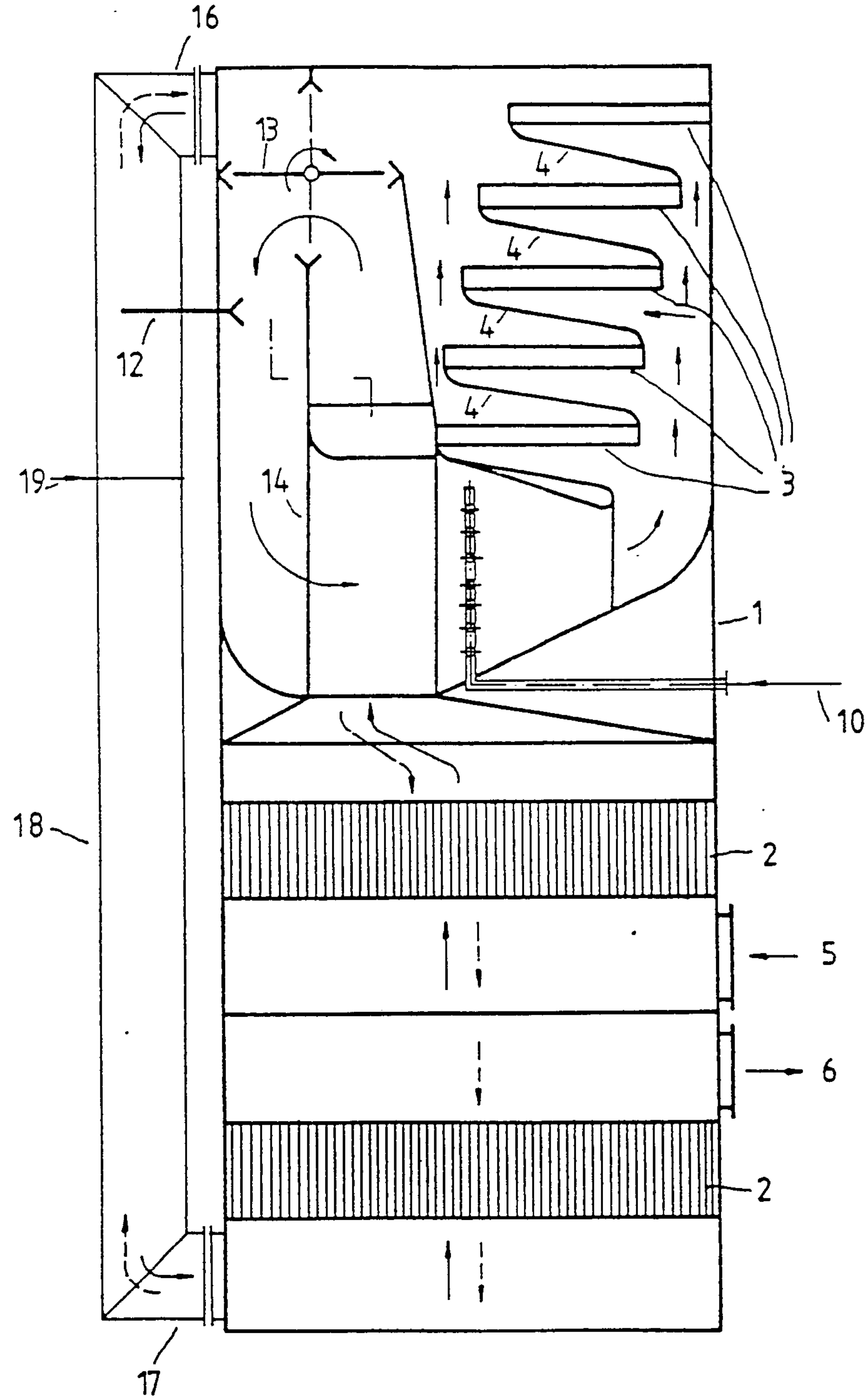


Fig. 1

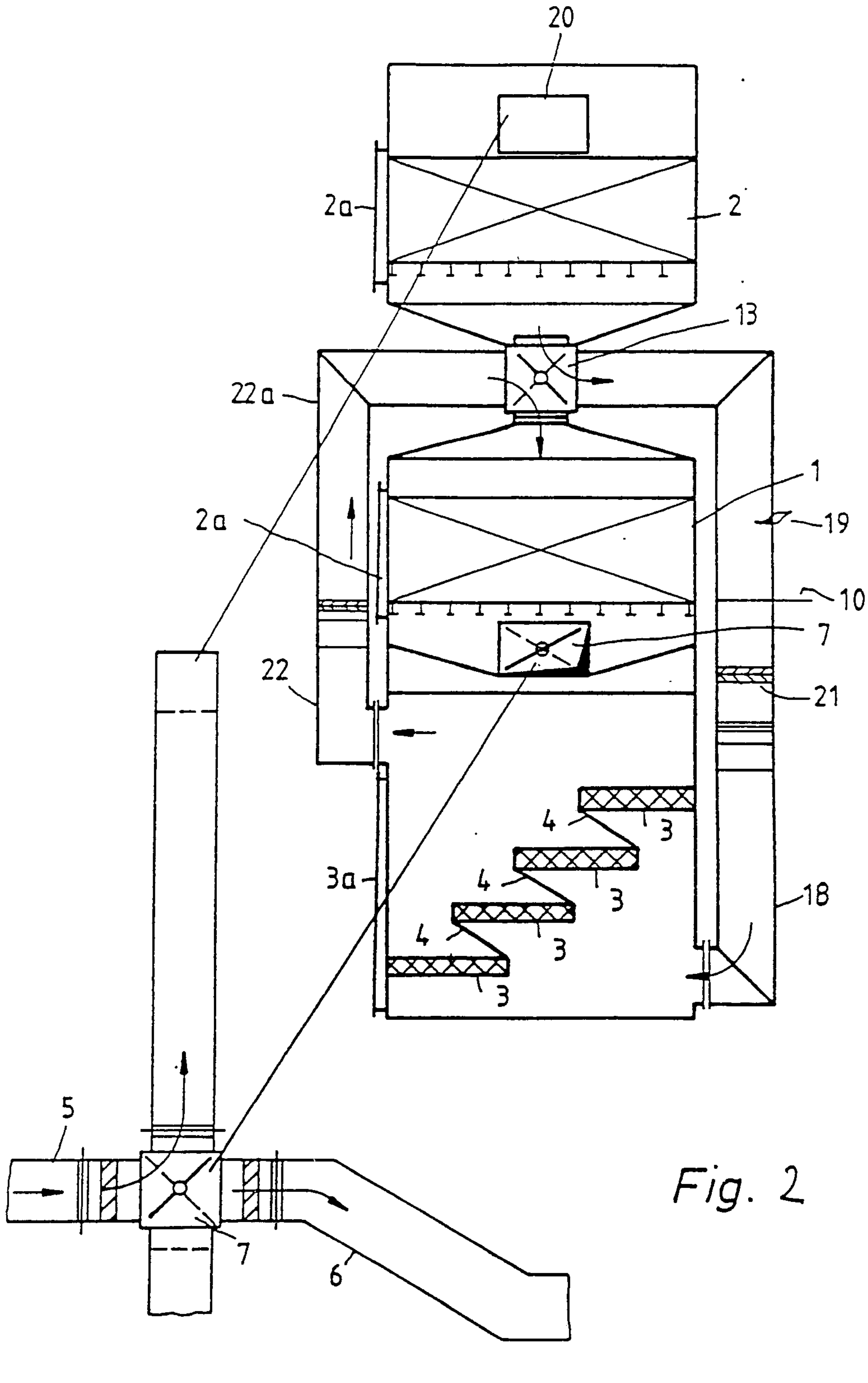


Fig. 2

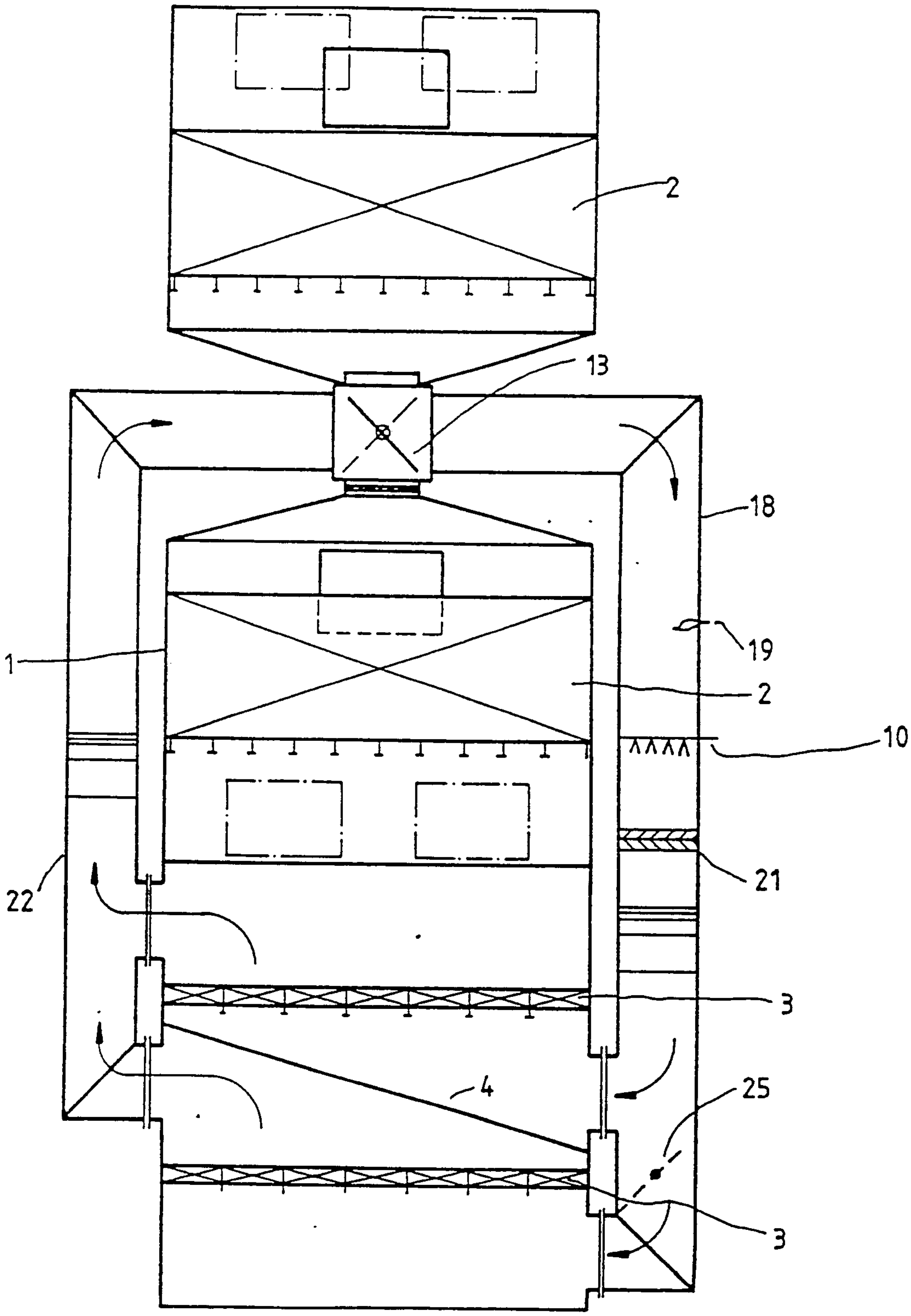


Fig. 3